# EUROPÄISCHE PATENTANMELDUNG

(11) **EP 3 712 685 A1**
(43) Veröffentlichungstag der Anmeldung: **23.09.2020**
(21) Anmeldenummer: 20163965.5
(22) Anmeldetag: 18.03.2020
(51) Int. Cl.: G02B 27/01, G02B 5/00

(54) **HEAD-UP-DISPLAY UND FAHRZEUG MIT SOLCH EINEM HEAD-UP-DISPLAY**

(30) Priorität: 18.03.2019 DE 102019106860
(71) Anmelder: Yazaki Systems Technologies GmbH, 93059 Regensburg (DE)
(72) Erfinder: RODERER, Götz, 93105 Tegernheim (DE)
(74) Vertreter: Patentanwaltskanzlei WILHELM & BECK

(57) **Zusammenfassung**

Die Erfindung betrifft ein Head-Up-Display und ein Fahrzeug mit solch einem Head-Up-Display, wobei das Head-up-Display (100) zur Darstellung von Informationen für ein Fahrzeug (10), insbesondere für ein Nutzfahrzeug und/oder ein geländegängiges Fahrzeug ausgebildet ist und aufweisend eine Bilderzeugungseinheit (105) und eine Reflexionseinrichtung (110) aufweist, wobei mittels der Bilderzeugungseinheit (105) ein Bild zur Wiedergabe einer Information erzeugbar ist, wobei das Bild über einen ersten Strahlengang (125) einer Lichtstrahlung (126) gegen die Reflexionseinrichtung (110) unter einem Einfallswinkel (β) projizierbar ist, wobei die Reflexionseinrichtung (110) ein Metamaterial (135) aufweist, wobei das Metamaterial (135) ausgebildet ist, das Bild unter einem Ausfallswinkel (γ) zu reflektieren, wobei der Einfallswinkel (β) unterschiedlich zum Ausfallswinkel (γ) ist.

## Beschreibung

Die Erfindung betrifft ein Head-up-Display gemäß Patentanspruch 1 und ein Fahrzeug gemäß Patentanspruch 9.

Diese Patentanmeldung beansprucht die Priorität der deutschen Patentanmeldung DE 10 2019 106 860.6, deren Offenbarungsgehalt hiermit durch Rückbezug aufgenommen wird.

Es ist ein Head-up-Display für ein Fahrzeug bekannt, wobei das Head-up-Display eine Bilderzeugungseinheit und eine Reflexionsscheibe umfasst, wobei die Reflexionsscheibe ausgebildet ist, ein durch die Bilderzeugungseinheit erzeugtes Bild in Richtung eines Fahrzeugführers zurückzureflektieren. Die Reflexionseinrichtung ist transparent ausgebildet, sodass der Fahrzeugführer den von seiner Blickrichtung aus hinter der Reflexionseinrichtung liegenden Bereich weiterhin beobachten kann. Aufgrund der steilen Anordnung einer Frontscheibe sind jedoch Head-up-Displays in Nutzfahrzeugen derzeit nicht einsetzbar.

Es ist Aufgabe der Erfindung, ein verbessertes Head-up-Display und ein verbessertes Fahrzeug bereitzustellen.

Diese Aufgabe wird mittels eines Head-up-Displays gemäß Patentanspruch 1 und eines Fahrzeugs gemäß Patentanspruch 9 gelöst. Vorteilhafte Ausführungsformen sind in den abhängigen Ansprüchen angegeben.

Es wurde erkannt, dass ein verbessertes Head-up-Display zur Darstellung von Informationen für ein Fahrzeug, insbesondere für ein Nutzfahrzeug und/oder ein geländegängiges Fahrzeug, dadurch bereitgestellt werden kann, dass das Head-up-Display eine Bilderzeugungseinheit und eine transparente Reflexionseinrichtung aufweist, wobei mittels der Bilderzeugungseinheit ein Bild zur Wiedergabe einer Information erzeugbar ist, wobei das Bild über einen ersten Strahlengang einer Lichtstrahlung gegen die Reflexionseinrichtung unter einem Einfallswinkel projizierbar ist, wobei die Reflexionseinrichtung ein Metamaterial aufweist, wobei das Metamaterial ausgebildet ist, das Bild unter einem Ausfallswinkel zumindest teilweise zu reflektieren, wobei der Einfallswinkel unterschiedlich zum Ausfallswinkel ist.

Diese Ausgestaltung hat den Vorteil, dass das Head-up-Display auch in Fahrzeugen mit steiler Frontscheibe eingebaut werden kann. Durch das Metamaterial wird in der Auslegung des Fahrzeugs ein zusätzlicher Freiheitsgrad geschaffen, durch den das Head-up-Display auch bei schwierigen Einbausituationen realisiert werden kann.

In einer weiteren Ausführungsform weist die Reflexionseinrichtung eine erste Schicht mit einem ersten Matrixmaterial auf, wobei das erste Matrixmaterial für Lichtstrahlung mit einer Wellenlänge aus dem Bereich des sichtbaren Lichts transparent ausgebildet ist, wobei das Metamaterial in dem ersten Matrixmaterial eingebettet ist. Durch die Einbettung ist das Metamaterial vollständig umschlossen und vor Beschädigung geschützt.

In einer weiteren Ausführungsform weist die Reflexionseinrichtung eine zweite Schicht auf, wobei die erste Schicht folienartig ausgebildet ist und mit der zweiten Schicht verbunden ist, wobei die zweite Schicht ein zweites Matrixmaterial aufweist, wobei das zweite Matrixmaterial für Lichtstrahlung mit einer Wellenlänge aus dem Bereich des sichtbaren Lichts transparent oder intransparent ausgebildet ist, wobei die zweite Schicht dicker ausgebildet ist als die erste Schicht, wobei die zweite Schicht ausgebildet ist, die erste Schicht mechanisch zu tragen.

In einer weiteren Ausführungsform ist die zweite Schicht auf einer der Bilderzeugungseinheit abgewandten oder zugewandten Seite angeordnet.

In einer weiteren Ausführungsform bedeckt die erste Schicht im Wesentlichen vollflächig die zweite Schicht zumindest auf einer Seite der Schicht. Dies hat den Vorteil, dass die Reflexionseinrichtung besonders kompakt ausgebildet ist.

In einer weiteren Ausführungsform ist der Ausfallswinkel geringer als der Einfallswinkel oder der Ausfallswinkel größer als der Einfallswinkel.

In einer weiteren Ausführungsform weist das Metamaterial eine vordefinierte Nanostruktur auf, wobei die vordefinierte Nanostruktur und die durch die Bilderzeugungseinheit bereitgestellte Lichtstrahlung derart aufeinander abgestimmt sind, dass die Nanostruktur zumindest teilweise einen Teil der bereitgestellten Lichtstrahlung unter dem Ausfallswinkel reflektiert.
In einer weiteren Ausführungsform erstreckt sich die Reflexionseinrichtung im Wesentlichen vollständig in einer Ebene. Dadurch kann die Reflexionseinrichtung besonders kostengünstig ausgebildet und einfach hergestellt werden.

Ein verbessertes Fahrzeug, insbesondere Fahrzeug oder Luftfahrzeug beispielsweise ein Helikopter oder ein Transportflugzeug, mit einem Head-Up-Display kann dadurch bereitgestellt werden, dass die Reflexionseinrichtung ausgebildet ist, das reflektierte Bild in Richtung eines Auges eines Fahrzeugführers (bzw. einem Bereich in dem sich normalerweise die Augen des Fahrzeugführer aufhalten und der allgemein auch als Eye-Box bezeichnet wird) des Fahrzeugs zu reflektieren.

In einer weiteren Ausführungsform weist das Fahrzeug eine Frontscheibe auf, wobei die Frontscheibe in Fahrtrichtung vorderseitig am Fahrzeug angeordnet ist und einen Innenraum begrenzt, wobei das erste Matrixmaterial und die Frontscheibe einstückig und materialeinheitlich ausgebildet sind, oder wobei die Reflexionseinrichtung an einer Innenseite der Frontscheibe angeordnet ist.

In einer weiteren Ausführungsform ist die zweite Schicht auf einer dem Innenraum abgewandten Seite der Reflexionseinrichtung an der ersten Schicht angeordnet.

In einer weiteren Ausführungsform weist das Fahrzeug eine Frontscheibe und eine Steuereinrichtung zur Steuerung des Fahrzeugs auf, wobei die Frontscheibe in Fahrtrichtung vorderseitig am Fahrzeug angeordnet ist und einen Innenraum zumindest abschnittsweise begrenzt, wobei die Reflexionseinrichtung zwischen der Steuereinrichtung und der Frontscheibe, insbesondere beabstandet zu der Frontscheibe und der Steuereinrichtung, angeordnet ist.

In einer weiteren Ausführungsform weist die Frontscheibe eine Neigung zu einer Senkrechten zu der Fahrtrichtung von 0° bis 33°, insbesondere von 5° bis 14°, auf.

In einer weiteren Ausführungsform weist das Fahrzeug ein sich in Fahrtrichtung an die Frontscheibe anschließendes Armaturenbrett oder einen den Innenraum oberseitig begrenzenden Dachhimmel auf, wobei an dem Dachhimmel die Bilderzeugungseinheit angeordnet ist, wobei vorzugsweise an dem Armaturenbrett die Reflexionseinrichtung angeordnet ist.

Von besonderem Vorteil ist das oben beschriebene Head-up-Display, wenn das Fahrzeug ein Nutzfahrzeug und/oder ein geländegängiges Fahrzeug ist. In diesen Fahrzeugen kann mittels des oben beschriebenen Head-up-Displays besonders ergonomisch günstig die Information für den Fahrzeugführer bereitgestellt werden.

Nachfolgend wird die Erfindung anhand von Figuren näher erläutert. Dabei zeigen:
- Figur 1: einen Ausschnitt einer Schnittansicht durch ein Fahrzeug gemäß einer ersten Ausführungsform mit einem Head-Up-Display;
- Figur 2: einen Ausschnitt einer Reflexionseinrichtung des Head-Up-Displays;
- Figur 3: eine perspektivische Darstellung einer stark vergrößerten Ansicht eines in Figuren 1 und 2 gezeigten Metamaterials;
- Figur 4: eine Schnittansicht durch ein Fahrzeug gemäß einer zweiten Ausführungsform;
- Figur 5: eine Schnittansicht durch ein Fahrzeug gemäß einer dritten Ausführungsform;
- Figur 6: eine Schnittansicht durch ein Fahrzeug gemäß einer vierten Ausführungsform;
- Figur 7: eine Schnittansicht durch ein Fahrzeug gemäß einer fünften Ausführungsform;
- Figur 8: eine Schnittansicht durch ein Fahrzeug gemäß einer sechsten Ausführungsform;
- Figur 9: eine Schnittansicht durch eine Reflexionseinrichtung eines Fahrzeugs gemäß einer siebten Ausführungsform;
- Figur 10: eine schematische Darstellung einer Frontscheibe eines Fahrzeugs gemäß einer achten Ausführungsform; und
- Figur 11: eine schematische Darstellung einer Frontscheibe eines Fahrzeugs gemäß einer neunten Ausführungsform.

In den folgenden Figuren wird auf ein Koordinatensystem zum erleichternden Verständnis Bezug genommen. Das Koordinatensystem weist eine x-Achse (Längsrichtung/Fahrtrichtung), eine y-Achse (Querrichtung) und eine z-Achse (Höhenrichtung) auf. Das Koordinatensystem ist beispielhaft als Rechtssystem beispielhaft ausgebildet.

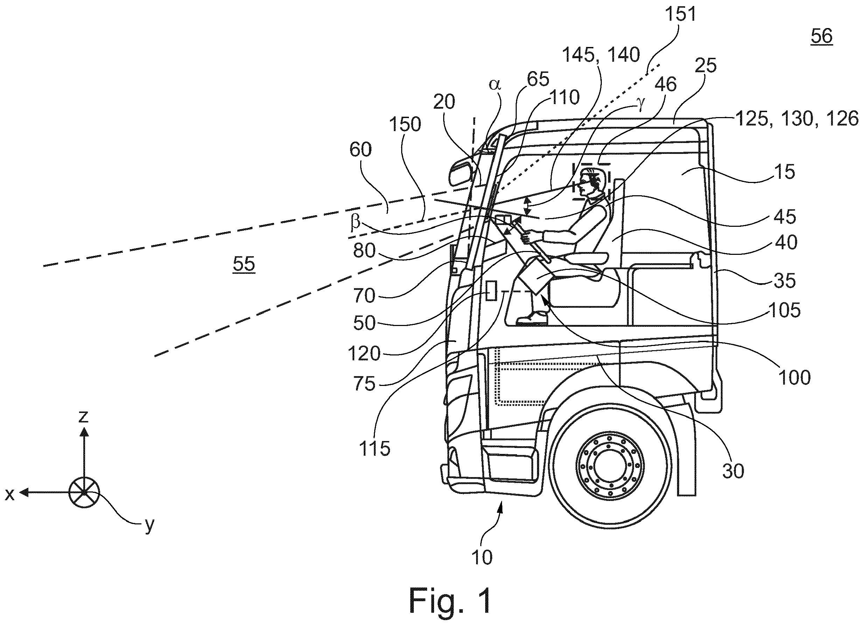

Figur 1 zeigt einen Ausschnitt einer Schnittansicht durch ein Fahrzeug 10 gemäß einer ersten Ausführungsform.

Das Fahrzeug 10 ist in der Ausführungsform beispielhaft als Kraftfahrzeug, vorteilhafterweise als Nutzfahrzeug, insbesondere als Sattelzugzugmaschine, beispielsweise in der Bauform eines Frontlenkers, ausgebildet. Das Nutzfahrzeug kann aber auch als Langhauber oder Kurzhauber ausgebildet sein. Alternativ ist auch denkbar, dass das Fahrzeug 10 beispielsweise als Sports Utility Vehicle (SUV) oder als Kastenwagen ausgebildet ist. Auch ist eine andere Ausgestaltung des Fahrzeugs 10 beispielsweise als Lieferwagen oder als landwirtschaftliches Nutzfahrzeug oder als Baumaschine denkbar.

In einer alternativen Ausführungsform ist das Fahrzeug 10 als Luftfahrzeug ausgebildet. Insbesondere kann das Luftfahrzeug hier als beispielsweise Kampfflugzeug oder als Mehrzweckflugzeug oder als Transportmaschine oder als Helikopter ausgebildet sein.

Das Fahrzeug 10 wird im Betrieb im Wesentlichen in Fahrtrichtung parallel zur x-Achse bewegt. Das Fahrzeug 10 weist einen Innenraum 15 auf. Der Innenraum 15 wird in Fahrtrichtung vorderseitig durch eine Frontscheibe 20 begrenzt. Die Frontscheibe 20 ist transparent ausgebildet. Oberseitig kann der Innenraum 15 durch einen Dachhimmel 25 begrenzt werden. Auf den Dachhimmel 25 kann aber auch verzichtet werden oder der Dachhimmel 25 kann transparent ausgebildet sein. Unterseitig weist das Fahrzeug 10 einen Fahrzeugboden 30 auf, der unterseitig den Innenraum 15 begrenzt. Rückseitig und seitlich wird der Innenraum 15 beispielhaft durch eine Fahrzeugkarosserie 35 begrenzt.

Die Frontscheibe 20 trennt den Innenraum 15 gegenüber einer Fahrzeugumgebung 56 ab. Insbesondere verhindert die Frontscheibe 20 ein Eindringen von Umwelteinflüssen, beispielsweise Fahrtwind, in den Innenraum 15. Oberseitig grenzt die Frontscheibe 20 an einem oberen Ende 65 an ein vorderes Ende des Dachhimmels 25 an. Ein unteres Ende 70 grenzt in Figur 1 an die Fahrzeugkarosserie 35 an einer Fahrzeugfront 75 an.

In dem Innenraum 15 ist ein Fahrersitz 40 angeordnet, wobei auf dem Fahrersitz 40 zumindest während der Fahrt ein Fahrzeugführer 45 Platz nimmt, um mittels einer im Innenraum 15 angeordneten Steuereinrichtung 50, beispielsweise einem Lenkrad oder einem Sidestick, das Fahrzeug 10 zu steuern. Ein Kopf bzw. Augen des Fahrzeugführers 45 befinden sich, bei einer normalen Haltung des Fahrzeugführers 45 auf dem Fahrersitz in einem vordefinierten Bereich 46. Der vordefinierten Bereich 46 erstreckt sich dreidimensional in x-, y- und z-Richtung. Der vordefinierte Bereich 46 wird allgemein auch "Eye-Box" genannt.

Der Fahrzeugführer 45 beobachtet zur Steuerung des Fahrzeugs 10 einen in Fahrtrichtung (Längsrichtung) vor dem Fahrzeug liegenden Raum 55 durch die für sichtbares Licht transparent ausgebildete Frontscheibe 20.

Ein Sichtfeld 60 der Frontscheibe 20 definiert dabei einen Teilabschnitt der Frontscheibe 20, durch den der Fahrzeugführer 45 zur Beobachtung des Raums 55 vor dem Fahrzeug 10 überwiegend blickt. Das Sichtfeld 60 wird zur Einhaltung von gesetzlichen Vorschriften beispielsweise beim Kraftfahrzeug mittels Wischerblättern freigehalten. Die Raumlichtstrahlung 81 verläuft in dem Sichtfeld 60.

Die Frontscheibe 20 weist eine Neigung unter einem Winkel α zu einer Senkrechten zu der Fahrtrichtung beispielsweise von 0 bis 33°, insbesondere von 5° bis 14°, auf. Die Senkrechte verläuft parallel zur z-Achse. Das Sichtfeld 60 ist sowohl zum oberen Ende 65 als auch zum unteren Ende 70 der Frontscheibe 20 beabstandet angeordnet. Zwischen der Frontscheibe 20 und der Steuereinrichtung 50, insbesondere dem Lenkrad 50, ist ein Armaturenbrett 80 angeordnet, wobei die Steuereinrichtung 50 beispielsweise an dem Armaturenbrett 80 angeordnet sein kann.

Um Informationen des Fahrzeugs 10, beispielsweise Navigationsdaten, Geschwindigkeit und/oder Höhe und/oder Fahrtrichtung und/oder Fahrtroute und/oder Daten einer Zielverfolgung und/oder einen künstlichen Horizont für den Fahrzeugführer 45 einfach darzustellen, weist das Fahrzeug 10 ein Head-up-Display 100 auf. Das Head-up-Display 100 weist eine Bilderzeugungseinheit 105 und eine vorzugsweise transparente ausgebildete Reflexionseinrichtung 110 auf. Die Bilderzeugungseinheit 105 ist mit einer Datenverbindung 115 mit einem Fahrzeugsteuergerät 120 des Fahrzeugs 10 verbunden. Im Betrieb des Fahrzeugs 10 stellt das Fahrzeugsteuergerät 120 wenigstens die Information, vorteilhafter Weise eine Vielzahl von Informationen über einen Fahrzeugbetriebsparameter, beispielsweise der Fahrtrichtung oder einer Route des Fahrzeugs und/oder einer Geschwindigkeit des Fahrzeugs 10, über die Datenverbindung 115 der Bilderzeugungseinheit 105 bereit. Die Bilderzeugungseinheit 105 erzeugt zur Darstellung der Information(en) ein Bild, das in regelmäßigen Abständen auf aktualisiert wird.

Das Armaturenbrett 80 schließt sich in Fahrtrichtung an die Frontscheibe 20 an. In der Ausführungsform ist die Bilderzeugungseinheit 105 in dem Armaturenbrett 80 eingelassen. Zusätzlich kann in dem Armaturenbrett 80 eine Öffnung vorgesehen sein durch die eine Lichtstrahlung 126 der Bilderzeugungseinrichtung 105 in Richtung Reflexionseinrichtung 105 projiziert wird. Alternativ kann die Bilderzeugungseinheit 105 oberseitig auf dem Armaturenbrett 80 angeordnet sein. In Figur 1 ist zur erleichterten Erkennbarkeit der Bilderzeugungseinheit 105 die Bilderzeugungseinheit 105 nur zur funktionellen Erklärung nach unten hin in Richtung des Fahrzeugbodens 30 verschoben dargestellt.

In der Ausführungsform ist die Reflexionseinrichtung 110 überwiegend plan ausgebildet und erstreckt sich in einer Ebene. Selbstverständlich kann die Reflexionseinrichtung 110 auch gekrümmt, insbesondere konvex gekrümmt, ausgebildet sein. Zum erleichterten Verständnis wird im Folgenden die Funktionsweise des Head-up-Displays 100 anhand der plan ausgebildeten Reflexionseinrichtung 110 erläutert. Sollte die Reflexionseinrichtung 110 eine Krümmung aufweisen, so gilt das im Folgenden Erläuterte ebenso, jedoch unter der Einschränkung, dass die Krümmung der Reflexionseinrichtung 110 optisch als Linse wirkt. Insbesondere kann hierbei die Reflexionseinrichtung 110 mit der Krümmung beispielsweise als Streulinse oder als Fokussierlinse wirken.

Die Bilderzeugungseinheit 105 erzeugt auf Grundlage einer durch das Fahrzeugsteuergerät 115 bereitgestellten Information, beispielsweise einer Geschwindigkeitsinformation, ein Bild mit Lichtstrahlen aus dem Bereich des sichtbaren Lichts. Das Bild wird beispielsweise durch die Öffnung in Richtung der Reflexionseinrichtung 110 projiziert. Das Bild gibt die Information des Fahrzeugsteuergeräts 115 wieder. Die Lichtstrahlung 126 weist beispielhaft eine vordefinierte Wellenlänge aus einem (engen) ersten Wellenlängenbereich des sichtbaren Lichts auf. Das Bild kann beispielsweise mittels einer Leuchtdiode, einem Leuchtdiodenarray und/oder einer Laserdiode oder einem Laserdiodenarray erzeugt werden. Zusätzlich kann die Bilderzeugungseinheit 105 zur Fokussierung des Bilds nicht dargestellte Linsen aufweisen, die in einem ersten Strahlengang des Bilds, erzeugt durch die Bilderzeugungseinheit 105, angeordnet sind. Der erste Strahlengang 125 ist von der Bilderzeugungseinheit 105 auf die Reflexionseinrichtung 110 gerichtet. Die Lichtstrahlung 126, mittels der das Bild dargestellt wird, trifft unter einem Einfallswinkel β auf die Reflexionseinrichtung 110.

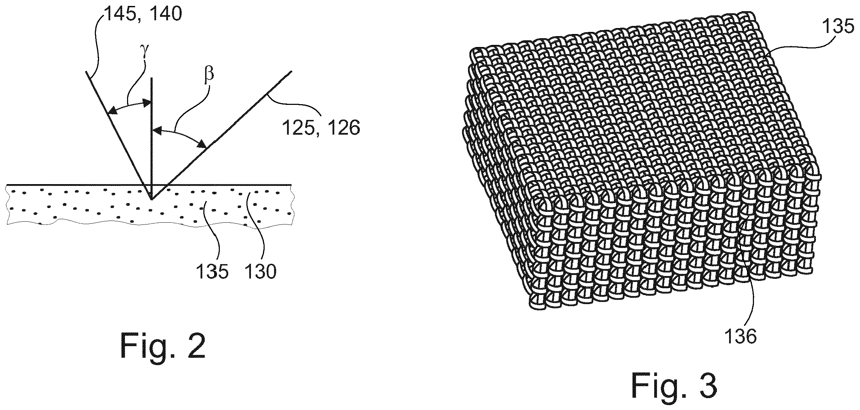

Figur 2 zeigt einen Ausschnitt der Reflexionseinrichtung 110 des in Figur 1 gezeigten Fahrzeugs 10.

Die Reflexionseinrichtung 110 weist in der Ausführungsform beispielhaft ein erstes Matrixmaterial 130 und ein erstes Metamaterial 135 auf. Das erste Metamaterial 135 kann beispielsweise eine erste Nanostruktur aufweisen. Bei der ersten Nanostruktur handelt es sich um eine künstlich geschaffene und nicht in der Natur vorkommende Struktur. Die erste Nanostruktur weist durch ihre künstlich geschaffene Struktur andere Eigenschaften auf, als in der Natur vorkommende Strukturen.

Das erste Metamaterial 135 ist in dem ersten Matrixmaterial 130 eingebettet. Dabei wird unter dem Ausdruck "eingebettet" verstanden, dass das erste Matrixmaterial 130 vollständig das erste Metamaterial 135 umschließt. Dadurch ist das erste Metamaterial 135 durch das erste Matrixmaterial 130 geschützt.

In der Ausführungsform ist das erste Matrixmaterial 130 steif ausgebildet und weist beispielhaft einen Glaswerkstoff auf. Auch kann das erste Matrixmaterial 130 beispielsweise ein Kunststoffmaterial, beispielsweise Polycarbonat aufweisen. Im Wesentlichen ist das erste Matrixmaterial 130 für Lichtstrahlung aus dem Bereich des sichtbaren Lichts transparent. Dabei wird unter Transparenz verstanden, dass wenigstens 80 %, vorzugsweise wenigstens 90 %, insbesondere wenigstens 95 % der Lichtstrahlung 126 (zumindest aus dem Bereich des sichtbaren Lichts) die Reflexionseinrichtung 110 und/oder die Frontscheibe 20 passieren kann. Das erste Matrixmaterial 130 und die Frontscheibe 20 können abschnittsweise einstückig und materialeinheitlich ausgebildet sein.

Das erste Metamaterial 135 ist für den ersten Wellenlängenbereich aus dem Bereich des sichtbaren Lichts intransparent und zumindest teilweise reflektierend. Für einen zweiten Wellenlängenbereich kann das erste Metamaterial 135 transparent sein. Das erste Metamaterial 135 kann beispielsweise derart ausgebildet sein, dass das erste Metamaterial 135 im ersten Wellenlängenbereich das erste Metamaterial 135 wenigstens 1 %, vorzugsweise wenigstens 10 %, der auf das erste Metamaterial 135 treffenden Lichtstrahlung 126 reflektiert. Der übrige Anteil der Lichtstrahlung 126, die auf das erste Metamaterial 135 trifft und nicht reflektiert wird, kann entweder vom ersten Metamaterial 135 absorbiert werden und in Wärme umgewandelt werden und/oder durchdringt das erste Metamaterial 135 und das erste Matrixmaterial 130 und tritt auf der andere Seite der Reflexionseinrichtung 110, bezogen auf die in Figur 1 gezeigte Ausgestaltung außenseitig an der Frontscheibe 20, aus der Reflexionseinrichtung 110 aus.

Der erste Strahlengang 125 trifft unter dem Einfallswinkel β auf die Reflexionseinrichtung 110. Dabei reflektiert das erste Metamaterial 135 die mit dem ersten Strahlengang 125 einfallende Lichtstrahlung 126 zumindest teilweise in einem zweiten Strahlengang 140 mit einem Ausfallswinkel γ als reflektierte Lichtstrahlung 145. Der Einfallswinkel β und der Ausfallswinkel γ werden jeweils auf eine Normale zu der Reflexionseinrichtung 110 bezogen. Der Ausfallswinkel γ kann beispielhaft größer als der Einfallswinkel β sein. Der Ausfallswinkel γ ist dabei abhängig von dem Werkstoff des ersten Metamaterials 135 und/oder der Ausrichtung der ersten Nanostruktur des ersten Metamaterials 135. Somit können zusammengefasst durch die erste Nanostruktur des ersten Metamaterials 135 die optischen Eigenschaften der Reflexionseinrichtung 110 definiert beeinflusst werden, um so definiert den zweiten Strahlengang 140 in seiner Ausrichtung im Wesentlichen unabhängig zu der geometrischen Ausgestaltung der Frontscheibe 20 festzulegen.

In der Ausführungsform ist der zweite Strahlengang 140 derart ausgerichtet, dass der zweite Strahlengang 145 in Richtung dem vordefinierten Bereich 46, insbesondere in Richtung Augen des Fahrzeugführers 45, gerichtet ist.

Das sich die Position der Augen des Fahrzeugführer 45 in Abhängigkeit der Sitzposition ändern kann, wird für die Auslegung des Metamaterials 135 und somit die Ausrichtung des zweiten Strahlengangs typischerweise der vordefinierte Bereich 46 zugrunde gelegt. Der vordefinierte Bereich definiert dabei einen dreidimensionalen Raum, in dem der Fahrzeugführer 45 die reflektierte Lichtstrahlung erfassen kann und zum anderen üblicherweise sich die Augen des Fahrzeugführers 45 befinden. Dies stellt sicher, dass der Fahrzeugführer 45 sich während der Fahrt bewegen kann und gleichzeitig die reflektierte Lichtstrahlung 145 erfassen kann.
Im Folgenden wird sowohl auf Figur 1 als auch auf Figur 2 Bezug genommen. Im Betrieb des Fahrzeugs 10 blickt der Fahrzeugführer 45 nach vorne in Richtung des Raums 55 vor dem Fahrzeug 10, um durch Beobachtung des Raums 55 entsprechend einer im Raum 55 erfassten Verkehrssituation das Fahrzeug 10 entsprechend angepasst zu steuern. Das erfasste Licht aus dem Raum 55 ist in Figur 1 mittels durchgezogener Linie 150 symbolisch dargestellt.

Gleichzeitig kann das Head-up-Display 100 aktiviert sein, um die Information über zumindest einen Fahrzeugbetriebsparameter oder Navigationsdaten darzustellen. Das Bild wird wie oben erläutert über den ersten Strahlengang 125 auf die Reflexionseinrichtung 110 projiziert, wobei das erste Metamaterial 135 das Bild zumindest teilweise reflektiert. Der zweite Strahlengang 140 strahlt in Richtung der Augen des Fahrzeugführers 45 und/oder dem vordefinierten Bereich 46. In der Ausführungsform verläuft das aus dem Raum kommende Licht im Wesentlichen längs/parallel des zweiten Strahlengangs 145. Der Fahrzeugführer 45 kann dann gleichzeitig durch die Anordnung der Reflexionseinrichtung 110 in seinem Sichtfeld 60 sowohl das aus dem Raum 55 kommende Licht (in Figur 1 symbolisch mit der Linie 150 dargestellt) als auch reflektierte Lichtstrahlung 145 des zweiten Strahlengangs 140 und damit das reflektierte Bild erfassen.

Wenn statt des ersten Metamaterials 135 die Reflexionseinrichtung 110 beispielsweise eine herkömmliche Reflexionsschicht, beispielsweise aus Silbermaterial, aufweist und der Ausfallswinkel γ gleich dem Einfallswinkel β ist, verläuft der zweite Strahlengang 145 entlang einer weiteren in Figur 1 gezeigten Linie 151. Die weitere Linie 151 verläuft außerhalb des vordefinierten Bereichs 46 in Richtung dem Dachhimmel 25. Die reflektierte Lichtstrahlung 145 könnte vom Fahrzeugführer 45 in diesem Fall nicht wahrgenommen werden.

Die oben beschriebene Ausgestaltung des Head-up-Displays 100 und des entsprechenden Fahrzeugs 10 mit dem Head-up-Display 100 hat den Vorteil, dass die Frontscheibe 20 mit der darin integrierten Reflexionseinrichtung 110 besonders steil geneigt sein kann und die Bilderzeugungseinheit 105 in dem Armaturenbrett 80 angeordnet sein kann. Dadurch eignet sich das oben beschriebene Head-up-Display 100 insbesondere für Fahrzeuge mit steiler Frontscheibe, wie beispielsweise Nutzfahrzeuge oder Sports Utility Fahrzeuge oder auch Luftfahrzeuge. Selbstverständlich kann das Head-up-Display 100 auch in Fahrzeugen eingesetzt sein, die eine besonders flach geneigte Frontscheibe 20 aufweisen wie beispielsweise Sportwagen, Supersportwagen oder Kampfflugzeuge. Bei diesen Fahrzeugen 10 ist von Vorteil, dass die Bilderzeugungseinheit 105 platztechnisch günstig im Armaturenbrett 80 platziert werden kann ohne dass die übliche optische Regel "Einfallswinkel gleich Ausfallswinkel" durch die Verwendung des oben beschrieben ersten Metamaterials 135 einzuhalten ist.

Durch die Wahl des ersten Metamaterials 135 und die definierte Ausrichtung/Positionierung der ersten Nanostruktur des ersten Metamaterials 135 im Raum kann gezielt der Ausfallswinkel γ definiert festgelegt werden, wodurch das Bild besonders gut in den Blickbereich des Fahrzeugführers 45 angeordnet werden kann, sodass der Fahrzeugführer 45 während der Fahrt/während des Flugs mit ausreichend Informationen über den Fahrzeugbetriebsparameter des Fahrzeugs 10 versorgt werden kann.

Figur 3 zeigt eine perspektivische Darstellung einer stark vergrößerten Ansicht des in Figuren 1 und 2 in dem ersten Matrixmaterial 130 eingebetteten ersten Metamaterials 135.

Das erste Metamaterial 135 weist die regelmäßige erste Nanostruktur im Nanometerbereich auf. Die erste Nanostruktur weist Bogenabschnitte 136 auf, die sich in regelmäßigen Mustern wiederholen. Das in Figur 3 gezeigte erste Metamaterial 135 ist dabei ausgebildet, beispielsweise sichtbares Licht aus dem grünen (ersten) Wellenlängenbereich, beispielsweise aus einem ersten Wellenlängenbereich von 490 nm bis 575 nm zu reflektieren. Die erste Lichtstrahlung 126, die durch die Bilderzeugungseinheit 105 erzeugt wird, ist derart auf das erste Metamaterial 135 abgestimmt, dass die bereitgestellte erste Lichtstrahlung 126 aus dem ersten Wellenlängenbereich ist und beispielsweise 550 nm aufweist. Dies hat zur Folge, dass das erste Metamaterial 135 den ersten Anteil der auf das erste Metamaterial 135 eintreffenden ersten elektromagnetischen Strahlung des ersten Lichtstrahls 126 reflektieren kann. Dadurch, dass das erste Metamaterial 135 transparent außerhalb des oben genannten ersten Wellenlängenbereichs ist, kann das Licht aus dem Raum 55 besonders gut die Reflexionseinrichtung 110 mit dem ersten Metamaterial 135 durchdringen. Das erste Metamaterial 135 reflektiert nur Licht aus dem Raum 55, das den oben genannten ersten Wellenlängenbereich aufweist. Da der erste Wellenlängenbereich für die Reflexion des ersten Metamaterials 135 schmal ist und zum anderen beispielsweise nur ein geringer Anteil der Lichtstrahlung 126 durch das erste Metamaterial 135 reflektiert wird, wird das durch den Fahrzeugführer 45 wahrgenommene Bild aus dem Raum 55 nur unwesentlich durch das erste Metamaterial 135 beeinträchtigt. Dadurch empfindet der Fahrzeugführer das Head-up-Display 100 als besonders angenehm und das erste Metamaterial 135 nicht als störend.

Selbstverständlich ist auch denkbar, dass das erste Metamaterial 135 elektromagnetische Strahlung aus einem zum ersten Wellenlängenbereich unterschiedlichen zweiten Wellenlängenbereich reflektiert. Dies kann beispielsweise dadurch erreicht werden, dass das erste Metamaterial 135 mehrere Schichten von ersten Nanostrukturen aufweist, wobei jede der Schichten auf jeweils einen Wellenlängenbereich zur Reflexion abgestimmt ist und die jeweilige Schicht Licht aus dem passenden Wellenlängenbereich im Betrieb des Head-up-Displays 100 reflektiert.

In einer Weiterbildung des in Figur 3 gezeigten Metamaterials 135 können die Bogenabschnitte 136 derart zueinander ausgerichtet sein, dass zusätzlich zu den reflektierenden Eigenschaft des Metamaterials das Metamaterial 135 die reflektierte Lichtstrahlung 145 fokussiert oder streut.

Das Vorsehen des ersten Metamaterials 135 in der Reflexionseinrichtung 110 hat ferner zusätzlich den Vorteil, dass die Bilderzeugungseinheit 105 auch an Positionen befestigt werden kann, die neben der steil angeordneten Frontscheibe 20 besonders gut zur Positionierung der Bilderzeugungseinheit 105 geeignet sind. Dies ermöglicht neue Anordnungskombinationen und geometrische Ausgestaltungen des Head-up-Displays 100 gegenüber herkömmlichen Head-up-Displays.

Zusätzlich kann das erste Metamaterial 135 über seine Erstreckung hin in seiner Nanostruktur derart ausgebildet sein, dass das erste Metamaterial 135 den ersten Strahlengang 125 in dem vordefinierten Bereich 46 fokussiert oder aufgeweitet ist. Dadurch kann das erste Metamaterial 135 die Funktion einer Linse übernehmen, sodass das Head-Up-Display besonders einfach und kompakt ausgebildet ist.

Ferner kann beispielsweise zusätzlich ein Fokalpunkt oder Fokus für das projizierte Bild so gelegt sein, dass ein Fokus des Fahrzeugführers 45 außerhalb des Innenraums 15, beispielsweise im Raum 55 vor dem Fahrzeug 10 liegt. Dadurch kann ein holographisches Darstellungsgefühl für den Fahrzeugführer 45 erzielt werden. Ferner ist hierfür bei Beobachtung des Raums 55 vor dem Fahrzeug 10 für den Fahrzeugführer 45 kein Fokuswechsel notwendig, sodass hierdurch ein besonders angenehmes Fahrgefühl entsteht.

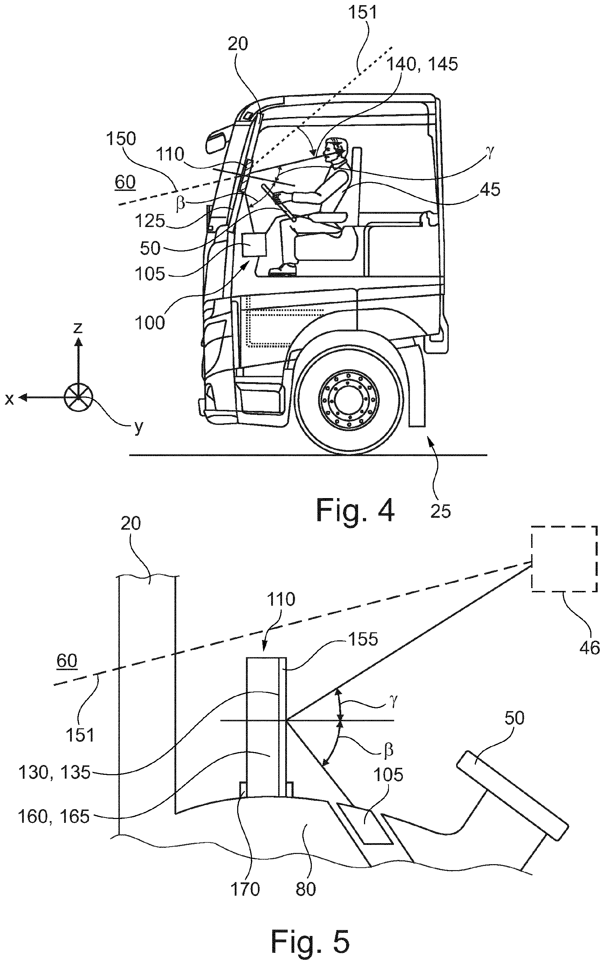

Figur 4 zeigt eine Schnittansicht durch ein Fahrzeug 10 gemäß einer zweiten Ausführungsform.

Das Fahrzeug 10 und das Head-up-Display 100 sind im Wesentlichen identisch zu dem in den Figuren 1 bis 3 erläuterten Fahrzeug 10 und dessen Head-up-Displays 100 ausgebildet. Im Folgenden wird ausschließlich auf die Unterschiede zwischen dem in Figur 4 gezeigten Fahrzeug 10 und dem in Figur 1 gezeigten Fahrzeug 10 eingegangen.

Gegenüber Figur 1 ist die Bilderzeugungseinheit 105 weiter in Fahrtrichtung (x-Richtung) nach vorne im Armaturenbrett 80 zwischen der Steuereinrichtung 50 und der Frontscheibe 20 angeordnet. Dadurch weist der erste Strahlengang 125 der einfallenden Lichtstrahlung 126 auf die Reflexionseinrichtung 110 einen besonders großen Einfallswinkel β auf. Durch das erste Metamaterial 135 ist der Ausfallswinkel γ gegenüber dem Einfallswinkel β reduziert, sodass auf diese Art und Weise der zweite Strahlengang 140 der reflektierten Lichtstrahlung 145 in Richtung des Fahrzeugführers 45 reflektiert ist. Durch den reduzierten Ausfallswinkel γ ist somit gegenüber der weiteren Linie 151 die zweite reflektierte Lichtstrahlung 145 nach unten geschwenkt.

Diese Ausgestaltung hat den Vorteil, dass die Bilderzeugungseinrichtung 105 auch bei steiler Frontscheibe 20 zwischen der Steuereinrichtung 50 und der Frontscheibe 20 angeordnet werden kann. Auch kann das erste Metamaterial 135 und/oder die Reflexionseinrichtung 110 mit ersten Metamaterial 135 im direktem Sichtfeld 60 des Fahrzeugführers 45 angeordnet sein, sodass dadurch in das Sichtfeld 60 das Bild eingeblendet werden kann und somit der Fahrzeugführer 45 gleichzeitig den Raum 55 vor dem Fahrzeug beobachten kann.

Figur 5 zeigt einen Ausschnitt einer Schnittansicht durch ein Fahrzeug 10 gemäß einer dritten Ausführungsform.

Das Fahrzeug 10 ist im Wesentlichen identisch zu dem in den Figuren 1 bis 4 erläuterten Fahrzeug 10 ausgebildet. Im Folgenden wird ausschließlich auf die Unterschiede des in Figur 5 gezeigten Fahrzeugs 10 gegenüber dem in den Figuren 1 bis 4 gezeigten Fahrzeug 10 eingegangen.

Die Reflexionseinrichtung 110 weist eine folienartige erste Schicht 155 auf. Die erste Schicht 155 weist das erste Matrixmaterial 130 und das in dem ersten Matrixmaterial 130 eingebettete erste Metamaterial 135 auf. Das erste Matrixmaterial 130 ist transparent für die Lichtstrahlung 126 der Bilderzeugungseinheit 105. Die erste Schicht 155 kann einen elastischen Werkstoff aufweisen.

Zusätzlich weist die Reflexionseinrichtung 110 beispielhalft eine zweite Schicht 160 mit einem zweiten Matrixmaterial 165 auf, wobei das zweite Matrixmaterial 165 unterschiedlich oder identisch zu dem ersten Matrixmaterial 130 sein kann. Das zweite Matrixmaterial 165 ist für Lichtstrahlung 126 aus dem Bereich des sichtbaren Lichts transparent ausgebildet. Die zweite Schicht 160 ist beispielhaft dicker ausgebildet als die erste Schicht 155 und ist ausgebildet, die erste Schicht 155 mechanisch zu tragen. Das zweite Matrixmaterial 165 kann beispielsweise Polycarbonat aufweisen, und die erste Schicht 155 kann im Wesentlichen vollflächig die zweite Schicht 160 auf einer Seite bedecken. Die Reflexionseinrichtung 110 kann beispielsweise in Fahrtrichtung zwischen der Steuereinrichtung 50 und der Frontscheibe 20, insbesondere beabstandet zu der Frontscheibe 20, angeordnet sein. Die zweite Schicht 160 ist dabei auf einer der Bilderzeugungseinheit 105 abgewandten Seite und auf einer zum Innenraum 15 und/oder Fahrersitz 40 abgewandten Seite der ersten Schicht 155 angeordnet. Die Schicht 160 erstreckt beispielsweise sich in einer Ebene und ist plan ausgebildet. In Kombination mit dem ersten Metamaterial 135, das über seine Erstreckung in y- Richtung und/oder z-Richtung hinweg eine unterschiedliche Nanostruktur aufweist und dadurch die reflektierte Lichtstrahlung 145 im vordefinierten Bereich 46 fokussiert oder aufweitet, kann die Reflexionseinrichtung 110 besonders einfach und kostengünstig ausbildet sein. Ferner kann auf zusätzliche Linsen in dem Head-up-Display 100 verzichtet werden.

Alternativ kann die zweite Schicht 160 auch auf einer der Steuereinrichtung 50 beziehungsweise auf einer der Frontscheibe 20 abgewandten Seite der ersten Schicht 155 angeordnet sein.

Diese Ausgestaltung hat den Vorteil, dass, sollte die Frontscheibe 20 innenseitig eine ungünstige optische Geometrie aufweisen, diese die Darstellung des Bildes beziehungsweise die Reflexion des ersten Strahlengangs 125 nicht beeinflusst. Durch die Anordnung des ersten Metamaterials 135 in der ersten Schicht 155 kann der Ausfallswinkel γ so festgelegt werden, dass die reflektierte Lichtstrahlung 145 im zweiten Strahlengang 140 in Richtung des Fahrzeugführers 45 gerichtet ist. In dem vordefinierten Bereich 46 treffen sowohl das Licht aus dem Raum 55 und die reflektierte Lichtstrahlung 145 in unterschiedlichem Winkel auf die Augen des Fahrzeugführers 45.

Die Reflexionseinrichtung 110 kann mittels eines Befestigungsmittels 170 auf dem Armaturenbrett 80 befestigt sein. Diese Position wird im Allgemeinen als Look-down-Position bezeichnet, in der der Fahrzeugführer 45 nach unten hin zu der Reflexionseinrichtung 110 blicken muss, um die reflektierte Lichtstrahlung 145 zu erfassen.

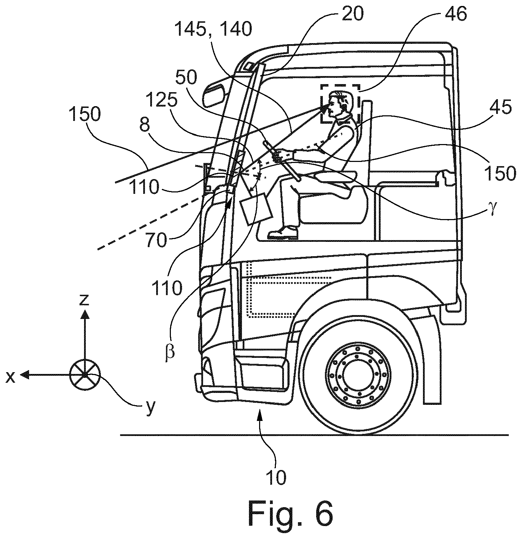

Figur 6 zeigt eine Schnittansicht durch ein Fahrzeug 10 gemäß einer vierten Ausführungsform.

Das Fahrzeug 10 ist im Wesentlichen eine Kombination der in Figur 5 erläuterten Ausführungsform und der in den Figuren 1 bis 4 erläuterten Ausführungsformen des Fahrzeugs 10. Im Folgenden wird ausschließlich auf die Unterschiede des in Figur 6 gezeigten Fahrzeugs 10 gezeigten gegenüber den in den vorherigen Figuren erläuterten Fahrzeugen 10 eingegangen.

In der in Figur 6 gezeigten Ausführungsform sind die zweite Schicht 160 und die Frontscheibe 20 einstückig und materialeinheitlich ausgebildet, sodass die erste Schicht 155 folienartig innenseitig auf die Frontscheibe 20 aufgebracht ist. Dabei schließt sich beispielhaft die erste Schicht 155 im Wesentlichen an das untere Ende 70 der Frontscheibe 20 an, sodass die Reflexionseinrichtung 110 und das erste Metamaterial 135, wie in Figur 5 gezeigt, in der Look-down-Position befestigt sind. Dabei kann beispielsweise die erste Schicht 155 zwischen dem unteren Ende 70 und dem Sichtbereich 60 angeordnet sein.

Das erste Metamaterial 135 ist in der Ausführungsform derart gewählt, dass der Ausfallswinkel γ größer ist als der Einfallswinkel β. Dies führt dazu, dass anstatt wie bei einer herkömmlichen Reflexion der Lichtstrahlung 126 (dargestellt mit der weiteren Linie 151) die reflektierte Lichtstrahlung 145 nicht auf der Brust oder dem Bauchbereich des Fahrzeugführers 45 auftrifft, sondern in Richtung de vordefinierten Bereichs 46 reflektiert wird. Dadurch ist der zweite Strahlengang 140 nach oben hin gegenüber der weiteren Linie 151 verschwenkt.

Dadurch dass die Reflexionseinrichtung 110 folienartig auf die Frontscheibe 20 aufgebracht ist, sind das Head-up-Display 100 und Fahrzeug 10 besonders kostengünstig und einfach ausgebildet. Insbesondere kann das in Figur 6 beschriebene Head-up-Display 100 auch als Zusatzausstattungsoption einfach nachgerüstet und/oder als Zusatzausstattungsoption beim Fahrzeug 10 gewählt werden.

Ferner kann bei einem Schaden der Frontscheibe 20 auf einfache Weise die Frontscheibe 20 ausgetauscht werden und die erste Schicht 155 einfach innenseitig auf die getauschte Frontscheibe 20 aufgebracht werden.

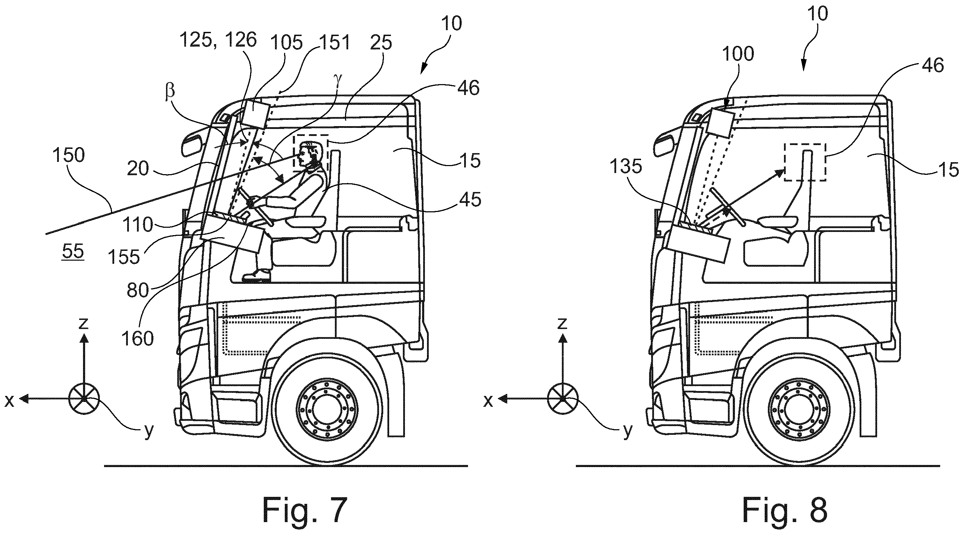

Figur 7 zeigt eine Schnittansicht durch ein Fahrzeug 10 gemäß einer fünften Ausführungsform.

Das Fahrzeug 10 ist im Wesentlichen identisch zu dem in den Figuren 1 bis 6 gezeigten Fahrzeug 10 ausgebildet. Im Folgenden wird ausschließlich auf die Unterschiede des in Figur 7 gezeigten Fahrzeugs 10 gegenüber den in den Figuren 1 bis 6 gezeigten Fahrzeugen 10 eingegangen.

In der Ausführungsform ist die Bilderzeugungseinheit 105 am Dachhimmel 25 angeordnet. Die Bilderzeugungseinheit 105 erzeugt dabei das Bild, das mit der Lichtstrahlung 126 mittels des ersten Strahlengangs 125 in Richtung der Reflexionseinrichtung 110 projiziert wird. Der erste Strahlengang 125 ist im Wesentlichen beabstandet und parallel zu der Frontscheibe 20 verlaufend ausgebildet.

Dadurch kann vermieden werden, dass Streulicht der Lichtstrahlung 126 durch die Frontscheibe 20 innenseitig reflektiert wird.

Am Armaturenbrett 80 ist die Reflexionseinrichtung 110 befestigt. Dabei kann die Reflexionseinrichtung 110 die erste Schicht 155 aufweisen. Die zweite Schicht 160 kann einstückig und materialeinheitlich mit beispielsweise einer Oberflächenbeschichtung des Armaturenbretts 80 ausgebildet sein, sodass die zweite Schicht 160 intransparent für die durch die Bilderzeugungseinheit 105 bereitgestellte Lichtstrahlung 126 ist.

In der Ausführungsform ist die Längserstreckung der Reflexionseinrichtung 110 beispielhaft im Wesentlichen stark geneigt, beispielsweise in einem Winkel von 70 bis 110° zu der Frontscheibe 20 ausgerichtet. Insbesondere kann hierbei beispielsweise die Reflexionseinrichtung 110 senkrecht zu der Frontscheibe 20 ausgerichtet sein. Die erste Schicht 155 ist dabei auf der zum Innenraum 15 zugewandten Seite angeordnet und ist beispielhaft oberseitig der zweiten Schicht 160 angeordnet. Das erste Metamaterial 135 ist in Figur 7 derart gewählt, dass das erste Metamaterial 135 die eintreffende Lichtstrahlung 126 in Richtung des vordefinierten Bereichs 46 reflektiert. Dabei ist der Ausfallswinkel γ deutlich größer, in der Ausführungsform etwa fünf Mal so groß wie der Einfallswinkel β. Diese Ausgestaltung hat den Vorteil, dass nicht, wie in Figur 7 dargestellt, die reflektierte Lichtstrahlung 145 wieder zurück direkt in Richtung des Dachhimmels 25 bei der Bilderzeugungseinheit 105 reflektiert wird (in Figur 7 mit der weiteren Linie 151 angedeutet), sondern in Richtung des Fahrzeugführers 45.

Ferner kann durch die Anordnung der Reflexionseinrichtung 110 auf dem Armaturenbrett 80 bei Beschädigung der Frontscheibe 20 die Frontscheibe 20 ohne weiteres ausgewechselt werden.

Des Weiteren ist durch die flache Anordnung der Reflexionseinrichtung 110 auf dem Armaturenbrett 80 das Armaturenbrett 80 besonders flach ausgebildet, sodass dieses besonders einfach zu reinigen ist.

Figur 8 zeigt eine Schnittansicht durch ein Fahrzeug 10 gemäß einer sechsten Ausführungsform.

Das Fahrzeug 10 ist im Wesentlichen identisch zu dem in Figur 7 gezeigten Fahrzeug 10 ausgebildet. Abweichend dazu ist der Fokus oder Fokalpunkt mittels des ersten Metamaterials 135 so gewählt, dass der Fokus innerhalb des Innenraums 15 angeordnet ist.

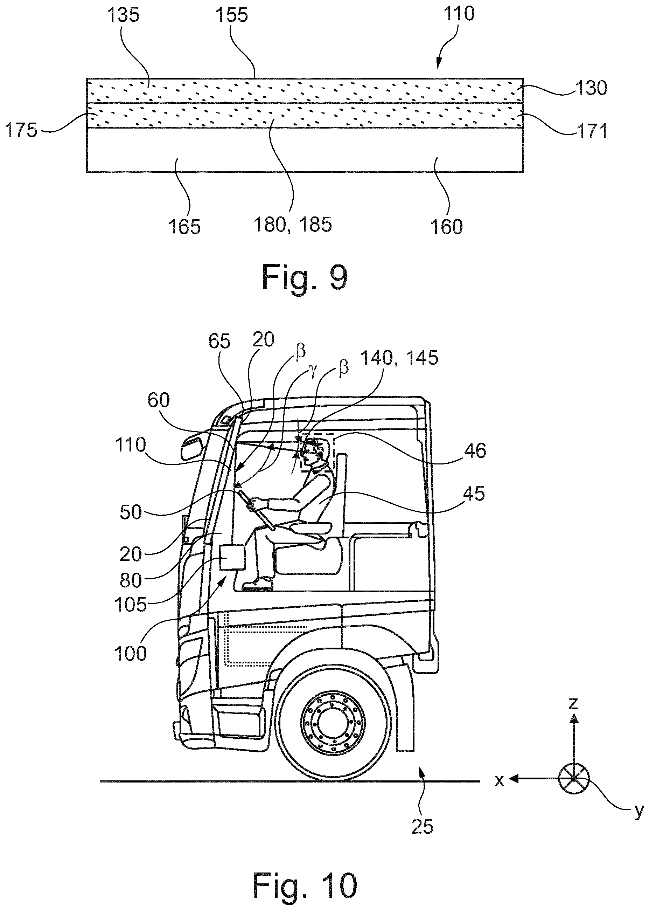

Figur 9 zeigt eine Schnittansicht durch eine Reflexionseinrichtung 110 eines Fahrzeugs 10 gemäß einer sechsten Ausführungsform.

Die Reflexionseinrichtung 110 ist im Wesentlichen identisch zu der in den Figuren 1 bis 8 erläuterten Reflexionseinrichtung 110 ausgebildet. Abweichend dazu weist die Reflexionseinrichtung 110 neben der ersten Schicht 155 und der zweiten Schicht 160 eine dritte Schicht 171 auf. Die dritte Schicht 171 ist beispielhaft direkt zwischen der ersten Schicht 155 und der zweiten Schicht 160 angeordnet. Zusätzlich können weitere Schichten (in Figur 9 nicht dargestellt) zwischen der ersten Schicht 155 und der zweiten Schicht 160 angeordnet sein.

Die dritte Schicht 171 ist im Wesentlichen identisch zu der ersten Schicht 155 ausgebildet. Die dritte Schicht 171 weist ein drittes Matrixmaterial 175 auf, wobei das dritte Matrixmaterial 175 identisch zu dem ersten Matrixmaterial 130 und/oder zu dem zweiten Matrixmaterial 165 gewählt sein kann. Insbesondere kann hierbei das dritte Matrixmaterial 175 einstückig und materialeinheitlich, und dadurch auch übergangslos, mit dem ersten Matrixmaterial 130 ausgebildet sein. Zusätzlich weist die dritte Schicht 171 ein zweites Metamaterial 180 auf, wobei das zweite Metamaterial 180 unterschiedlich zu dem ersten Metamaterial 135 gewählt ist und/oder unterschiedlich zu dem ersten Metamaterial 135 ausgerichtet ist. Das zweite Metamaterial 180 kann eine zweite Nanostruktur 185 aufweisen, wobei die zweite Nanostruktur 185 unterschiedlich zu der in Figur 3 gezeigten ersten Nanostruktur ausgebildet ist und/oder unterschiedlich zu der ersten Nanostruktur ausgerichtet ist.

Das zweite Metamaterial 180 ist ausgebildet, Licht mit einer Wellenlänge aus einem dritten Wellenlängenbereich, der unterschiedlich zum zweiten und/oder ersten Wellenlängenbereich ist, zu reflektieren. So kann beispielsweise das zweite Metamaterial 180 ausgebildet sein, Licht aus einem roten Farbspektrum zu reflektieren. Dadurch kann die Reflexionseinrichtung 110 transparent ausgebildet sein und somit der Fahrzeugführer 45 den Raum 55 vor dem Fahrzeug erfassen. Gleichzeitig kann ein mehrfarbiges Bild der Bilderzeugungseinheit 105 reflektiert werden. Sollten weitere Schichten vorgesehen sein, so kann in jeder weiteren Schicht jeweils ein weiteres Metamaterial angeordnet sein, wobei jedes des in den Schichten 130, 170 und der weiteren Schicht angeordneten Metamaterials 135, 180 jeweils auf einen unterschiedlichen Wellenlängenbereich abgestimmt ist, um jeweils die unterschiedliche Wellenlänge der auf die Reflexionseinrichtung 110 treffenden Lichtstrahlung 126 zu reflektieren.

Auch ist denkbar, dass das erste Metamaterial 135 und das zweite Metamaterial 180 gemeinsam in der ersten Schicht 155 angeordnet sind. Dies kann beispielsweise dadurch erfolgen, dass die in Figur 3 gezeigten Abschnitte beispielsweise jeweils unterschiedlich lang und auf die jeweils zu reflektierende Wellenlänge abgestimmt und abwechselnd vorgesehen sind.

Figur 10 zeigt eine schematische Darstellung eines Fahrzeugs 10 gemäß einer achten Ausführungsform.

Das Fahrzeug 10 ist im Wesentlichen identisch zu der in den Figuren 1 bis 9 gezeigten Ausgestaltung ausgebildet. Im Folgenden wird nur auf die Unterschiede des in Figur 10 gezeigten Fahrzeugs 10 gegenüber dem in den Figuren 1 bis 9 gezeigten Fahrzeugs 10 eingegangen.

Die Reflexionseinrichtung 110 ist in der Ausführungsform beispielhaft oberhalb des Sichtfelds 60 angeordnet. Dabei kann die Reflexionseinrichtung 110 benachbart zu dem oberen Ende 65 der Frontscheibe 20 angeordnet sein. Diese Position wird allgemein als Look-Up Position bezeichnet. Die Bilderzeugungseinrichtung 105 ist in dem Armaturenbrett 80 angeordnet.

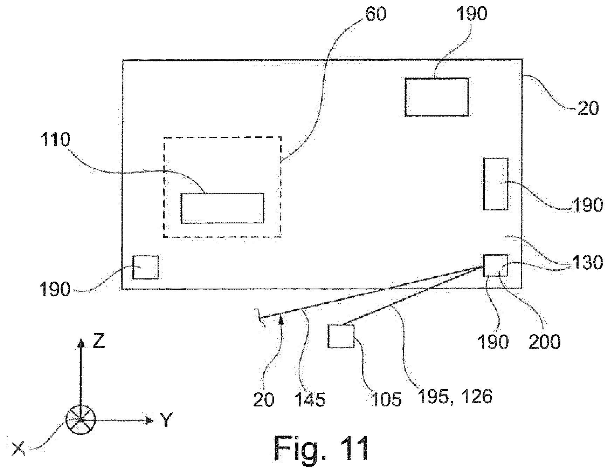

Figur 11 zeigt eine schematische Darstellung der Frontscheibe 20 eines Fahrzeugs 10 gemäß einer neunten Ausführungsform.

Das Fahrzeug 10 ist im Wesentlichen identisch zu der in den Figuren 1 bis 10 gezeigten Ausgestaltung ausgebildet. Im Folgenden wird nur auf die Unterschiede des in Figur 11 gezeigten Fahrzeugs 10 gegenüber dem in den Figuren 1 bis 10 gezeigten Fahrzeugs 10 eingegangen.

Die Frontscheibe 20 ist in ihrer geometrischen Ausgestaltung im Wesentlichen identisch zu der in den Figuren 1 bis 3 gezeigten Frontscheibe 20 ausgebildet. Dabei ist die Reflexionseinrichtung 110 beispielhaft im unteren Bereich des Sichtfelds 60 in y-Richtung direkt vor dem Fahrzeugführer 45 angeordnet.

Abweichend zu der in den Figuren 1 bis 3 gezeigten Ausgestaltung weist das Head-up-Display 100 wenigstens eine, vorzugsweise mehrere, weitere Reflexionseinrichtung(n) 190 auf, wobei die weitere Reflexionseinrichtung 190 beabstandet zu der Reflexionseinrichtung 110 angeordnet ist. Die weitere Reflexionseinrichtung 190 und die Reflexionseinrichtung 110 weisen jeweils das erste Matrixmaterial 130 auf, wobei das erste Matrixmaterial 130 beispielhaft einstückig und materialeinheitlich mit dem Material der Frontscheibe 20 ausgebildet ist. Die weitere Reflexionseinrichtung 190 weist ein drittes Metamaterial 200 auf. Das dritte Metamaterial 200 kann identisch zu dem ersten oder zweiten Metamaterial 135, 180 ausgebildet sein, wobei das dritte Metamaterial 200 in seiner Ausrichtung der Nanostruktur derart orientiert ist, dass die einfallende Lichtstrahlung 126 in Richtung dem Fahrzeugführer 45 zumindest teilweise reflektiert wird.

Die weitere Reflexionseinrichtung 190 ist beispielhaft außerhalb des Sichtfelds 60, mit dem der Fahrzeugführer 45 den Verkehr vor dem Fahrzeug 10 zur Steuerung des Fahrzeugs 110 im Wesentlichen hauptsächlich durchblickt, angeordnet. Beispielhaft kann die weitere Reflexionseinrichtung 190 in einem Eckbereich oder in einem seitlichen Endbereich angrenzend an eine A-Säule des Fahrzeugs 10 angeordnet sein.

Die Bilderzeugungseinheit 105 ist dabei so ausgebildet, dass die Bilderzeugungseinheit 105 sowohl das Bild in Richtung der Reflexionseinrichtung 110 und/oder auch der weiteren Reflexionseinrichtung 190 projizieren kann. Dazu kann beispielsweise die Bilderzeugungseinheit 105 eine (schaltbare) Umlenkeinrichtung, beispielsweise eine Prismaanordnung und/oder eine Spiegelanordnung aufweisen. So kann beispielsweise die Bilderzeugungseinheit 105 ein Bild mit einer Information über einen Reifendruck mittels eines dritten Strahlengangs 195 in Richtung der weiteren Reflexionseinrichtung 190 projizieren. Die Lichtstrahlung 126 trifft mit einem weiteren Einfallswinkel auf die weitere Reflexionseinrichtung 190. Das dritte Metamaterial 200 ist dabei so ausgebildet und/orientiert, dass die auf das dritte Matrixmaterial 200 treffende Lichtstrahlung 126 des dritten Strahlengangs 205 in Richtung des Fahrzeugführers 45 zumindest teilweise reflektiert wird, sodass bei einem Blick des Fahrzeugführers 45 in Richtung der weiteren Reflexionseinrichtung 190 der Fahrzeugführer die mittels der weiteren Reflexionseinrichtung 190 reflektierte Lichtstrahlung 145 erfassen kann. So kann beispielsweise die weitere Reflexionseinrichtung 190 genutzt werden, um eine Information beispielsweise über einen Reifendruck eines Reifens, der in Fahrtrichtung vorne rechts angeordnet ist, durch die schematisch zugeordnete Anordnung der weiteren Reflexionseinrichtung 190 zu der Position des Reifens schematisch darzustellen.

Auch ist denkbar, dass das erste Metamaterial 135 sich im Wesentlichen über den gesamten Bereich der Frontscheibe 20 erstreckt und somit die Reflexionseinrichtung 110 und Frontscheibe 20 identisch sind. Dabei ist jedoch das erste Metamaterial 130 in der ersten Nanostruktur derart ausgebildet, dass die erste Nanostruktur in Abhängigkeit der Positionierung an der Frontscheibe 20 die auf das erste Metamaterial 135 auftreffende Lichtstrahlung 126 in Richtung des Fahrzeugführers 45 reflektiert. Somit ist das erste Metamaterial 135 in der ersten Nanostruktur über die Reflexionseinrichtung 110 hinweg kontinuierlich verändert, um die Reflexionseigenschaften zur Reflexion des mittels der Bilderzeugungseinheit 105 auf die Reflexionseinrichtung 110 gerichteten Bildes in Richtung des Fahrzeugführers 45 zurückzuwerfen. Dies kann beispielsweise dadurch erfolgen, dass die in Figur 3 gezeigten Bogenabschnitte 136 der ersten Nanostruktur in ihrer Ausrichtung hinweg über die Reflexionseinrichtung 110 kontinuierlich verändert sind.

Es wird darauf hingewiesen, dass die in Figuren beschriebenen Merkmale auch miteinander kombiniert werden können. Ebenfalls können einzelne Merkmale weggelassen werden.

### Bezugszeichenliste

- 10: Fahrzeug
- 15: Innenraum
- 20: Frontscheibe
- 25: Dachhimmel
- 30: Fahrzeugboden
- 35: Fahrzeugkarosserie
- 40: Fahrersitz
- 45: Fahrzeugführer
- 46: vordefinierter Bereich
- 50: Steuereinrichtung
- 55: Raum vor dem Fahrzeug
- 56: Fahrzeugumgebung
- 60: Sichtfeld
- 65: oberes Ende der Frontscheibe
- 70: unteres Ende der Frontscheibe
- 75: Fahrzeugfront
- 80: Armaturenbrett
- 100: Head-up-Display
- 105: Bilderzeugungseinheit
- 110: Reflexionseinrichtung
- 115: Datenverbindung
- 120: Fahrzeugsteuergerät
- 125: erster Strahlengang
- 126: Lichtstrahlung
- 130: erstes Matrixmaterial
- 135: erstes Metamaterial
- 136: Bogenabschnitt
- 140: zweiter Strahlengang
- 145: reflektierte Lichtstrahlung
- 150: Linie
- 155: erste Schicht
- 160: zweite Schicht
- 165: zweites Matrixmaterial
- 170: Befestigungsmittel
- 171: dritte Schicht
- 175: drittes Matrixmaterial
- 180: zweites Metamaterial
- 185: zweite Nanostruktur
- 190: weitere Scheibe
- 195: weiterer Strahlengang
- 200: dritte Metamaterial
- 205: dritter Strahlengang

## Patentansprüche

1. Head-up-Display (100) zur Darstellung von Informationen für ein Fahrzeug (10), insbesondere für ein Nutzfahrzeug und/oder ein geländegängiges Fahrzeug,
- aufweisend eine Bilderzeugungseinheit (105) und eine Reflexionseinrichtung (110),
- wobei mittels der Bilderzeugungseinheit (105) ein Bild zur Wiedergabe einer Information erzeugbar ist,
- wobei das Bild über einen ersten Strahlengang (125) einer Lichtstrahlung (126) gegen die Reflexionseinrichtung (110) unter einem Einfallswinkel (β) projizierbar ist,
- wobei die Reflexionseinrichtung (110) ein Metamaterial (135) aufweist,
- wobei das Metamaterial (135) ausgebildet ist, das Bild unter einem Ausfallswinkel (γ) zu reflektieren,
- wobei der Einfallswinkel (β) unterschiedlich zum Ausfallswinkel (γ) ist.

2. Head-up-Display (100) nach Anspruch 1,
- wobei die Reflexionseinrichtung (110) eine erste Schicht (155) mit einem ersten Matrixmaterial (130) aufweist,
- wobei das erste Matrixmaterial (130) für Lichtstrahlung (126) mit einer Wellenlänge aus dem Bereich des sichtbaren Lichts transparent ausgebildet ist,
- wobei das Metamaterial (135) in dem ersten Matrixmaterial (130) eingebettet ist.

3. Head-Up-Display (100) nach Anspruch 2
- wobei die Reflexionseinrichtung (110) eine zweite Schicht (160) aufweist,
- wobei die erste Schicht (155) folienartig ausgebildet ist und mit der zweiten Schicht (160) verbunden ist,
- wobei die zweite Schicht (160) ein zweites Matrixmaterial (165) aufweist,
- wobei das zweite Matrixmaterial (165) für Lichtstrahlung (126) mit einer Wellenlänge aus dem Bereich des sichtbaren Lichts transparent oder intransparent ausgebildet ist,
- wobei die zweite Schicht (160) dicker ausgebildet ist als die erste Schicht (155),
- wobei die zweite Schicht (160) ausgebildet ist, die erste Schicht mechanisch zu (155) tragen.

4. Head-Up-Display (100) nach Anspruch 3,
- wobei die zweite Schicht (160) auf einer der Bilderzeugungseinheit (105) abgewandten oder zugewandten Seite angeordnet ist.

5. Head-Up-Display (100) nach Anspruch 3 oder 4,
- wobei die erste Schicht (155) im Wesentlichen vollflächig die zweite Schicht (160) zumindest auf einer Seite der Schicht (155) bedeckt.

6. Head-Up-Display (100) nach einem der vorhergehenden Ansprüche,
- wobei der Ausfallswinkel (γ) geringer ist als der Einfallswinkel (β)
oder
- wobei der Ausfallswinkel (γ) größer als der Einfallswinkel (β) ist.

7. Head-Up-Display (100) nach einem der vorhergehenden Ansprüche,
- wobei das Metamaterial (135) eine vordefinierte Nanostruktur aufweist,
- wobei die vordefinierte Nanostruktur und die durch die Bilderzeugungseinheit (105) bereitgestellte Lichtstrahlung (126) derart aufeinander abgestimmt sind, dass die Nanostruktur zumindest teilweise einen Teil der bereitgestellten Lichtstrahlung (126) unter dem Ausfallswinkel (γ) reflektiert.

8. Head-Up-Display (100) nach einem der vorhergehenden Ansprüche,
- wobei die Reflexionseinrichtung (110) sich im Wesentlichen vollständig in einer Ebene erstreckt.

9. Fahrzeug (10), insbesondere Fahrzeug oder Luftfahrzeug,
- mit einem Head-Up-Display (100) nach einem der vorhergehenden Ansprüche,
- wobei die Reflexionseinrichtung (110) ausgebildet ist, das reflektierte Bild in Richtung eines Auges eines Fahrzeugführers (45) des Fahrzeugs (10) zu reflektieren.

10. Fahrzeug (10) nach Anspruch9,
- aufweisend eine Frontscheibe (20),
- wobei die Frontscheibe (20) in Fahrtrichtung vorderseitig am Fahrzeug (10) angeordnet ist und einen Innenraum (15) begrenzt,
- wobei das erste Matrixmaterial und die Frontscheibe (20) zumindest abschnittsweise einstückig und materialeinheitlich ausgebildet sind,
- oder
- wobei die Reflexionseinrichtung (110) an einer Innenseite der Frontscheibe (20) angeordnet ist.

11. Fahrzeug (10) nach Anspruch 9 oder 10,
- wobei die zweite Schicht (160) auf einer dem Innenraum (15) abgewandten Seite der Reflexionseinrichtung (110) an der ersten Schicht (155) angeordnet ist.

12. Fahrzeug (10) nach einem der Ansprüche 9 bis 11,
- aufweisend eine Frontscheibe (20) und eine Steuereinrichtung (50) zur Steuerung des Fahrzeugs (10),
- wobei die Frontscheibe (20) in Fahrtrichtung vorderseitig am Fahrzeug (10) angeordnet ist und einen Innenraum (15) zumindest abschnittsweise begrenzt,
- wobei die Reflexionseinrichtung (110) zwischen der Steuereinrichtung (50) und der Frontscheibe (20), insbesondere beabstandet zu der Frontscheibe (20) und der Steuereinrichtung (50), angeordnet ist.

13. Fahrzeug (10) nach einem der Ansprüche 9 bis 12,
- wobei die Frontscheibe (20) eine Neigung zu einer Senkrechten zu der Fahrtrichtung von 0° bis 33°, vorzugsweise 5° bis 14°, aufweist.

14. Fahrzeug (10) nach einem der Ansprüche 9 bis 13,
- aufweisend ein sich in Fahrtrichtung an die Frontscheibe (20) anschließendes Armaturenbrett (80),
- oder
- aufweisend einen den Innenraum (15) oberseitig begrenzenden Dachhimmel (25),
- wobei an dem Dachhimmel (25) die Bilderzeugungseinheit (105) angeordnet ist
- wobei vorzugsweise an dem Armaturenbrett (80) die Reflexionseinrichtung (110) angeordnet ist.

15. Fahrzeug (10) nach einem der Ansprüche 9 bis 14, wobei das Fahrzeug ein Nutzfahrzeug und/oder ein geländegängiges Fahrzeug ist.
